# EUROPEAN PATENT APPLICATION

(11) **EP 4 059 991 A1**
(43) Date of publication of application: **21.09.2022**
(21) Application number: 20887953.6
(22) Date of filing: 24.09.2020
(51) Int. Cl.: C08G 77/14, C08L 83/06, C09D 183/06

(54) **ORGANOPOLYSILOXANE AND COATING COMPOSITION CONTAINING SAME**

(30) Priority: 14.11.2019 JP 2019205881
(71) Applicant: Shin-Etsu Chemical Co., Ltd., Tokyo 100-0005 (JP)
(72) Inventor: YAMADA Tetsuro, Annaka-shi, Gunma 379-0224 (JP); YASUDA Shigeki, Annaka-shi, Gunma 379-0224 (JP); HIROKAMI Munenao, Annaka-shi, Gunma 379-0224 (JP)
(74) Representative: Mewburn Ellis LLP
(86) International application number: PCT/JP2020/036007
(87) International publication number: WO 2021/095367

(57) **Abstract**

This organopolysiloxane having a structural unit represented by general formula (1): 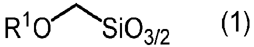 (in the formula, R¹ represents an unsubstituted or substituted alkyl group having 1-12 carbon atoms or an unsubstituted or substituted aryl group having 6-10 carbon atoms) and having at least one group that directly binds to a silicon atom and that is selected from the groups represented by general formula (2):

R²O- (2)

(in the formula, R² represents a hydrogen atom, an unsubstituted or substituted alkyl group having 1-10 carbon atoms, or an unsubstituted or substituted aryl group having 6-10 carbon atoms), is capable of achieving both hardness and bending resistance, exhibits excellent fast curing ability even when an amine-based compound is used as a curing catalyst, and is highly safe.

## Description

### TECHNICAL FIELD

This invention relates to an organopolysiloxane and to a coating composition containing the same. The invention relates more particularly to an organopolysiloxane having a specific structural unit and an alkoxysilyl group and/or a silanol group on the molecule, and to a coating composition which uses such an organopolysiloxane.

### BACKGROUND ART

Silicone resins are widely used today in a variety of fields because of their excellent properties such as water repellency, heat resistance, weather resistance, cold resistance, electrical insulating properties, chemical resistance and also safety to the body.

In particular, organopolysiloxanes having a three-dimensional crosslinked structure with SiO₂ units (Q units) and RSiO_{1.5} units (T units) (R being an organic group such as an alkyl or phenyl group) as the primary components are referred to as silicone resins or silicone alkoxy oligomers. Owing to their curability, extensive use is made of these in, for example, coating applications and binder applications.

Of these, liquid silicone alkoxy oligomers in which alkoxysilyl groups serve as crosslinking groups are used as the base resin in solvent-free coatings that do not contain organic solvents which are flammable and harmful to the human body (see Non-Patent Document 1).

Such alkoxysilyl groups undergo room-temperature crosslinking reactions due to moisture in the air. Hence, by mixing a curing catalyst with an alkoxysilyl group-containing silicone alkoxy oligomer, the alkoxysilyl groups react at room temperature to form a siloxane network, enabling an applied film of excellent heat resistance and weather resistance to be easily formed. Such silicone alkoxy oligomers are thus used in a wide range of fields, from outdoor buildings to electronic components.

In addition, silicone alkoxy oligomers, as noted above, do not need to be heated to cure, and so coatings that use such oligomers as the base resin also have the advantage that on-site application is possible.

Yet, although such silicone resins and silicone alkoxy oligomers do provide, on account of their three-dimensional crosslinked structure, the advantages of a good curability and a high surface hardness, owing to their high crosslink density, the pliability and flex resistance are inadequate and cracks sometimes form in the applied film with the passage of time following film formation or when the film is subjected to external stress.

A method used to improve such pliability and flex resistance is to incorporate diorganosiloxane (R₂SiO_{1.8}) units (D units) during silicone resin or silicone alkoxy oligomer synthesis. However, because the D units in this case are randomly incorporated, many D units must be added to impart pliability, which sometimes leads to undesirable declines in the excellent curability and surface hardness that are advantages of silicone resins.

The method of adding a silicone oil in which the molecular ends are capped with TEOS (Si(OEt)₄) has also been described (see Non-Patent Document 1). However, such silicone oils have a poor compatibility with silicone resins and silicone alkoxy oligomers, and thus cause clouding and crawling of the applied film.

As for silicone alkoxy oligomers, the addition of an organometallic compound or the like is generally essential for assuring sufficient curability at room temperature, with the addition of an organotin compound being especially effective. However, owing to concerns over the human and environmental toxicity of the organotin compounds normally used as catalysts, environmental regulations on such compounds have become strict in recent years and their use has come to be avoided.

Also, in cases where an organometallic catalyst such as an organotin compound is used in a dealcoholization-type room temperature-curable composition, siloxane bonds on the main chain are cleaved (cracking) by the alcohol that forms, sometimes giving rise to the problem of poor shelf stability, such as decreased curability or thickening over time.

### PRIOR ART DOCUMENTS

### NON-PATENT DOCUMENTS

Non-Patent Document 1: Polymeric Materials Science and Engineering, Vol. 79, 192 (1998)

### SUMMARY OF INVENTION

### TECHNICAL PROBLEM

The present invention was arrived at in light of the above circumstances. One object of the invention is to provide an organopolysiloxane which can exhibit both hardness and flex resistance, has good rapid cure properties even when an amine compound is used as the curing catalyst, and has an excellent safety. Another object is to provide a coating composition containing such an organopolysiloxane.

### SOLUTION TO PROBLEM

As a result of intensive investigations aimed at achieving these objects, the inventors have discovered that an organopolysiloxane which has, as a specific structural unit on the molecule, an alkoxy-methylene-silicon bond and also has an alkoxysilyl group and/or a silanol group possesses excellent rapid cure properties and gives a cured product exhibiting both hardness and flex resistance, even in cases where an amine compound is used in place of an organotin compound as the curing catalyst. The inventors have also found that compositions which contain this compound are suitable as curable compositions that form materials such as coatings.

Accordingly, the invention provides the following.
1. An organopolysiloxane which has a structural unit of general formula (1) below 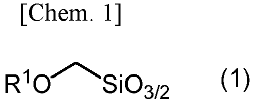 (wherein R¹ is a substituted or unsubstituted alkyl group of 1 to 12 carbon atoms or a substituted or unsubstituted aryl group of 6 to 10 carbon atoms) and at least one type of group selected from groups of general formula (2) below which bonds directly to a silicon atom

   [Chem. 2] R²O- (2)

   (wherein R² is a hydrogen atom, a substituted or unsubstituted alkyl group of 1 to 10 carbon atoms or a substituted or unsubstituted aryl group of 6 to 10 carbon atoms).
2. The organopolysiloxane of 1 above which has average compositional formula (3) below 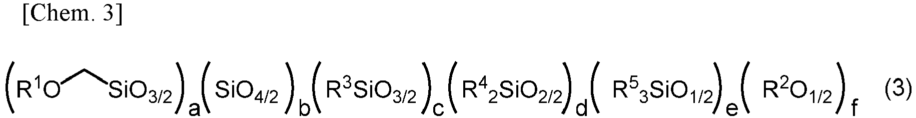 (wherein R¹ and R² are as defined above, R³, R⁴ and R⁵ are each independently a monovalent organic group, and the subscripts a, b, c, d, e and f are numbers which satisfy the conditions a > 0, b ≥ 0, c ≥ 0, d ≥ 0, e ≥ 0 and f > 0).
3. The organopolysiloxane of 1 or 2 above which has average compositional formula (4) below 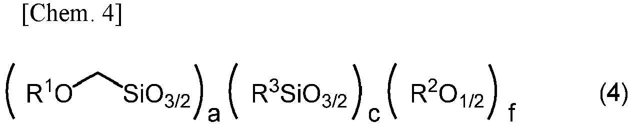 (wherein R¹, R², R³, a and f are as defined above, and c is a number that satisfies the condition c > 0).
4. A method for preparing the organopolysiloxane of 1 or 2 above, which method includes the step of hydrolyzing and condensing an alkoxysilane that includes a trialkoxysilane of structural formula (5) below 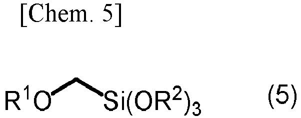 (wherein R¹ and R² are as defined above).
5. A method for preparing the organopolysiloxane of 3 above, which method includes the step of copolymerizing by hydrolysis and condensation a trialkoxysilane of structural formula (5) below 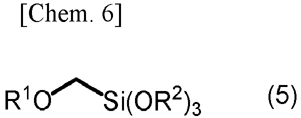 (wherein R¹ and R² are as defined above) and an alkoxysilane of structural formula (7) below

   [Chem. 7] R³-Si(OR²)₃ (7)

   (wherein R² and R³ are as defined above).
6. A curable composition which includes (A) the organopolysiloxane of any one of 1 to 3 above and (B) a curing catalyst.
7. The curable composition of 6 above, wherein the curing catalyst (B) is an amine compound.
8. A cured product obtained by curing the curable composition of 6 or 7 above.
9. A coating composition which includes (A) an organopolysiloxane of any one of 1 to 3 above and (B) a curing catalyst.
10. The coating composition of 9 above, wherein the curing catalyst (B) is an amine compound.
11. An article having a coating layer obtained by curing the coating composition of 9 or 10 above.

### ADVANTAGEOUS EFFECTS OF INVENTION

Because the organopolysiloxane of the invention has, as a specific structural unit on the molecule, an alkoxy-methylene-silicon bond and also has an alkoxysilyl group and/or a silanol group, compared with conventional silicone resins and silicone alkoxy oligomers, this organopolysiloxane possesses excellent rapid cure properties and gives a cured product that exhibits both hardness and flex resistance, even in cases where an amine compound is used in place of an organotin compound as the curing catalyst.

Compositions which contain the organopolysiloxane of the invention having such properties can be suitably used as curable compositions that form materials such as coatings.

### DESCRIPTION OF EMBODIMENTS

The invention is described below in greater detail.

The organopolysiloxane according to the invention has a structural unit of general formula (1) below and a group of general formula (2) below that is directly bonded to a silicon atom.

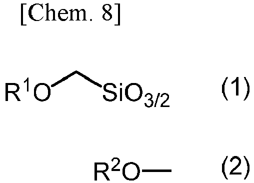

Here, R¹ is a substituted or unsubstituted alkyl group of 1 to 12 carbon atoms, preferably 1 to 3 carbon atoms, or is a substituted or unsubstituted aryl group of 6 to 10 carbon atoms.

The alkyl group of 1 to 12 carbon atoms serving as R¹ may be linear, cyclic or branched, although a linear or branched alkyl group is preferred, and a linear alkyl group is more preferred.

Specific examples include methyl, ethyl, n-propyl, n-butyl, s-butyl, t-butyl, n-pentyl, n-hexyl, n-heptyl, n-octyl, n-nonyl, n-decyl, n-undecyl and n-dodecyl groups. Methyl, ethyl and t-butyl groups are preferred; methyl and ethyl groups are more preferred, and methyl groups are even more preferred.

Specific examples of the aryl group of 6 to 10 carbon atoms include phenyl and naphthyl groups. Phenyl groups are preferred.

From the standpoint of the curability and hardness, R¹ is preferably an alkyl group of 1 to 3 carbon atoms.

R² is a hydrogen atom, a substituted or unsubstituted alkyl group of 1 to 10 carbon atoms, or a substituted or unsubstituted aryl group of 6 to 10 carbon atoms.

The alkyl group of 1 to 10 carbon atoms serving as R² may be linear, cyclic or branched, although linear alkyl groups are more preferred.

Specific examples include methyl, ethyl, n-propyl, n-butyl, n-pentyl, n-hexyl, n-heptyl, n-octyl, n-nonyl and n-decyl groups. Methyl, ethyl, n-propyl, n-hexyl and n-octyl groups are preferred; methyl and ethyl groups are more preferred; and methyl groups are even more preferred.

Specific examples of aryl groups of 6 to 10 carbon atoms include phenyl and naphthyl groups. A phenyl group is preferred.

In particular, from the standpoint of the curability, R² is preferably a hydrogen atom or an alkyl group of 1 to 3 carbon atoms.

Some or all of the hydrogen atoms on the alkyl groups and aryl groups represented by R¹ and R² may be substituted with halogen atoms such as F, Cl or Br, cyano groups and other substituents. Specific examples of such substituted groups include halogen-substituted alkyl groups such as the 3,3,3-trifluoropropyl group and cyano-substituted alkyl groups such as the 2-cyanoethyl group.

The organopolysiloxane of the present invention is not particularly limited, provided that it is one having a structural unit of general formula (1) above and a group of general formula (2) above that is directly bonded to a silicon atom. Of these, the organopolysiloxane may have a linear structure, branched structure or crosslinked structure composed of an organopolysiloxane skeleton.

Specifically, the organopolysiloxane of the invention is preferably one in which the average compositional formula is represented by formula (3) below. By using such a compound, an even better rapid curability, hardness and flex resistance are exhibited.

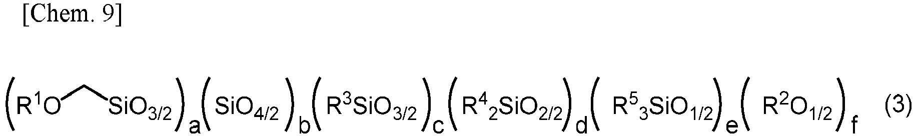

### (wherein R¹ and R² are as defined above.)

Here, R³, R⁴ and R⁵ are each independently a monovalent organic group.

The monovalent organic group is exemplified by, without particular limitation, the alkyl groups of 1 to 12 carbon atoms and the aryl groups of 6 to 10 carbon atoms mentioned above as examples of R¹ in general formula (1).

Some or all of the hydrogen atoms on these alkyl groups and aryl groups may be substituted with substituents. Examples of such substituents include halogen atoms, alkenyl groups such as vinyl groups, glycidyl-type epoxy groups, alicyclic epoxy groups, thiirane groups, (meth)acryloyloxy groups, mercapto groups, iso(thio)cyanate groups, succinic anhydride groups, amino groups, ethylenediamino groups, perfluoroalkyl groups, polyether groups such as polyoxyethylene groups, and perfluoropolyether groups.

R³, R⁴ and R⁵ may each be of two or more differing types of monovalent organic groups, in which case the two or more differing types of monovalent organic groups may be included in any proportions, there being no particular limitation on the individual proportions, so long as the proportions in which the two or more differing types of monovalent organic groups are included have a combined value of 1.

Thus, any groups may be selected from among the various above-mentioned monovalent organic groups and may be included in any proportions, such as, for example, alkyl groups in a proportion of 0.5 and aryl groups in a proportion of 0.5 as R³, or alkyl groups in a proportion of 0.2 and glycidyl-type epoxy group-containing alkyl groups in a proportion of 0.8 as R⁴.

Of these, from the standpoint of the rapid curability, hardness and flex resistance, R³, R⁴ and R⁵ are preferably unsubstituted alkyl groups of 1 to 12 carbon groups, unsubstituted aryl groups of 6 to 10 carbon atoms, glycidyl-type epoxy groups, (meth)acrylic groups or mercapto groups; and are more preferably unsubstituted alkyl groups of 1 to 12 carbon atoms.

The subscripts a, b, c, d, e and f represent numbers that satisfy the conditions a > 0, b ≥ 0, c ≥ 0, d ≥ 0, e ≥ 0 and f > 0. However, from the standpoint of the rapid curability, hardness and flex resistance, these preferably satisfy the conditions 1,000 ≥ a > 0, 500 ≥ b ≥ 0, 1,000 ≥ c ≥ 0, 1,000 ≥ d ≥ 0, 100 ≥ e ≥ 0 and 1,000 ≥ f > 0; more preferably satisfy the conditions 500 ≥ a > 0, 100 ≥ b ≥ 0, 500 ≥ c ≥ 0, 500 > d ≥ 0, 50 ≥ e:2: 0 and 500 ≥ f > 0; and even more preferably satisfy the conditions 500 ≥ a > 0, b = 0, 500 ≥ c > 0, d = 0, e = 0 and 500≥f>0.

Therefore, the organopolysiloxane of the invention is preferably one having an average compositional formula of formula (4) below. By using such a compound, even better rapid curability, hardness and flex resistance are exhibited. 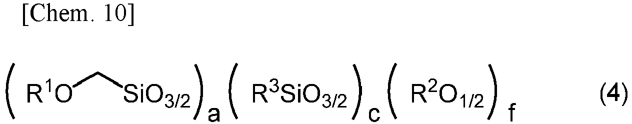 In the formula, R¹, R², R³, a and f are as defined above, and c is a number that satisfies the condition c > 0.

The number-average molecular weight of the organopolysiloxane of the invention is not particularly limited. However, in order to impart sufficient rapid curability, hardness and flex resistance to a cured product obtained by curing a curable composition containing this compound, the number-average molecular weight is preferably from 200 to 100,000, more preferably from 300 to 10,000, even more preferably from 400 to 5,000, and still more preferably from 500 to 1,000. The number-average molecular weight in this invention is a polystyrene-equivalent value obtained by gel permeation chromatography (GPC).

The organopolysiloxane of the invention can be prepared by copolymerizing a trialkoxysilane of structural formula (5) below (referred to below as trialkoxysilane (5)) with, as optional ingredients, various alkoxysilanes of structural formulas (6), (7), (8) and (9) below (referred to below as, respectively, alkoxysilane (6), (7), (8) or (9)) via hydrolysis and condensation.

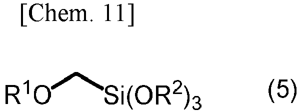

Si(OR²)₄ (6)

R³-Si(OR²)₃ (7)

R⁴₂-Si(OR²)₂ (8)

R⁵₃-Si(OR²) (9)

(wherein R¹ to R⁵ are as defined above.)

Specific examples of the trialkoxysilane (5) include methoxymethyltrimethoxysilane, ethoxymethyltriethoxysilane, methoxymethylmethyldimethoxysilane, ethoxymethylmethyldiethoxysilane, methoxymethyl ethyl dimethoxysilane, ethoxymethylethyldiethoxysilane, methoxymethylhexyldimethoxysilane, ethoxymethylhexyldiethoxysilane, methoxymethyloctyldimethoxysilane, ethoxymethyloctyldiethoxysilane, methoxymethylphenyldimethoxysilane and ethoxymethylphenyldiethoxysilane. Taking into account the rapid curability, hardness and flex resistance of the resulting organopolysiloxane, methoxymethyltrimethoxysilane and ethoxymethyltriethoxysilane are preferred.

By way of illustration, the structural formulas of the methoxymethyltrimethoxysilane and ethoxymethyltriethoxysilane mentioned above are shown below.

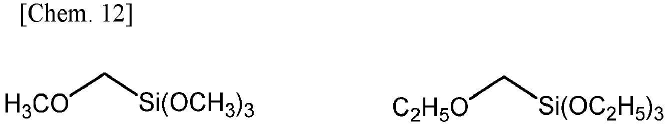

Specific examples of the alkoxysilane (6) serving as an optional ingredient include tetramethoxysilane, tetraethoxysilane, tetrapropoxysilane, tetraisopropoxysilane, tetrabutoxysilane and tetraoctoxysilane.

Specific examples of the alkoxysilane (7) serving as an optional ingredient include methyltrimethoxysilane, propyltrimethoxysilane, hexyltrimethoxysilane, octyltrimethoxysilane, decyltrimethoxysilane, phenyltrimethoxysilane, naphthyltrimethoxysilane, vinyltrimethoxysilane, allyltrimethoxysilane, hexenyltrimethoxysilane, octenyltrimethoxysilane, methyltriethoxysilane, propyltriethoxysilane, hexyltriethoxysilane, octyltriethoxysilane, decyltriethoxysilane, phenyltriethoxysilane, naphthyltriethoxysilane, vinyltriethoxysilane, allyltriethoxysilane, hexenyltriethoxysilane, octenyltriethoxysilane, 2-(3,4-epoxycyclohexyl)ethyltrimethoxysilane, 2-(3,4-epoxycyclohexyl)ethyltriethoxysilane, 3-glycidoxypropyltrimethoxysilane, 3-glycidoxypropyltriethoxysilane, 8-glycidoxyoctyltrimethoxysilane, 8-glycidoxyoctyltriethoxysilane, p-styryltrimethoxysilane, p-styryltriethoxysilane, methacryloxymethyltrimethoxysilane, methacryloxymethyltriethoxysilane, 3-methacryloxypropyltrimethoxysilane, 3-methacryloxypropyltriethoxysilane, 8-methacryloxyoctyltrimethoxysilane, 8-methacryloxyoctyltriethoxysilane, acryloxymethyltrimethoxysilane, acryloxymethyltriethoxysilane, 3-acryloxypropyltrimethoxysilane, 3-acryloxypropyltriethoxysilane, 8-acryloxyoctyltrimethoxysilane, 8-acryloxyoctyltriethoxysilane, N-2-(aminoethyl)-aminomethyltrimethoxysilane, N-2-(aminoethyl)-aminomethyltriethoxysilane, N-2-(aminoethyl)-3-aminopropyltrimethoxysilane, N-2-(aminoethyl)-3-aminopropyltriethoxysilane, N-2-(aminoethyl)-8-aminooctyltrimethoxysilane, N-2-(aminoethyl)-8-aminoctyltriethoxysilane, aminomethyltrimethoxysilane, aminomethyltriethoxysilane, 3-aminopropyltrimethoxysilane, 3-aminopropyltriethoxysilane, 8-aminooctyltrimethoxysilane, 8-aminooctyltriethoxysilane, N-phenyl-aminomethyltrimethoxysilane, N-phenyl-aminoethyltrimethoxysilane, N-phenyl-3-aminopropyltrimethoxysilane, N-phenyl-3-aminopropyltriethoxysilane, N-phenyl-8-aminooctyltrimethoxsilane, N-phenyl-8-aminooctyltriethoxysilane, 3-isocyanatopropyltrimethoxysilane, 3-isocyanatopropyltriethoxysilane, mercaptomethyltrimethoxysilane, mercaptomethyltriethoxysilane, 3-mercaptopropyltrimethoxysilane, 3-mercaptopropyltriethoxysilane, 8-mercaptooctyltrimethoxysilane, 8-mercaptooctyltriethoxysilane, 3-trimethoxysilylpropylsuccinic anhydride, 3-triethoxysilylpropylsuccinic anhydride, chloromethyltrimethoxysilane, chloromethyltriethoxysilane, 3-chloropropyltrimethoxysilane, 3-chloropropyltriethoxysilane, 8-chlorooctyltrimethoxysilane, 8-chlorooctyltriethoxysilane, trifluoropropyltrimethoxysilane, nonafluorohexyltrimethoxysilane, tridecafluorooctyltrimethoxysilane, polyethylene glycol methyl-3-trimethoxysilylpropyl ether, polyethylene glycol methyl-3-triethoxysilylpropyl ether, polypropylene glycol methyl-3-trimethoxysilylpropyl ether and polypropylene glycol methyl-3-triethoxysilylpropyl ether.

Of these, methyltrimethoxysilane, methyltriethoxysilane, vinyltrimethoxysilane, phenyltrimethoxysilane, 3-glycidoxypropyltrimethoxysilane, 3-glycidoxypropyltriethoxysilane, 3-methacryloxypropyltrimethoxysilane, 3-acryloxypropyltrimethoxysilane, 3-mercaptopropyltrimethoxysilane, 3-mercaptopropyltriethoxysilane, nonafluorohexyltrimethoxysilane, tridecafluorooctyltrimethoxysilane and polyethylene glycol methyl-3-trimethoxysilylpropyl ether are preferred as alkoxysilane (7); methyltrimethoxysilane and methyltriethoxysilane are more preferred.

Specific examples of the alkoxysilane (8) serving as an optional ingredient include dimethyl dimethoxysilane, dimethyldiethoxysilane, methylphenyldimethoxysilane, methylphenyldiethoxysilane, diphenyldimethoxysilane, diphenyldiethoxysilane, methylvinyldimethoxysilane, methylvinyldiethoxysilane, octenylmethyl dimethoxysilane, 2-(3,4-epoxycyclohexyl)ethylmethyldimethoxysilane, 3-glycidoxypropylmethyldimethoxysilane, 3-glycidoxypropylmethyldiethoxysilane, 3-methacryloxypropylmethyldimethoxysilane, 3-methacryloxypropylmethyldiethoxysilane, 3 -acryloxypropylmethyldimethoxysilane, N-2-(aminoethyl)-3-aminopropylmethyldimethoxysilane, N-2-(aminoethyl)-3-aminopropylmethyldiethoxysilane, 3-aminopropylmethyldimethoxysilane, 3-aminpropylmethyldiethoxysilane, 3-mercaptopropylmethyldimethoxysilane, 3-mercaptopropylmethyldiethoxysilane, 3-chloropropylmethyldimethoxysilane and 3-chloropropylmethyldiethoxysilane.

Of these, dimethyldimethoxysilane, dimethyldiethoxysilane, diphenyldimethoxysilane, methylvinyldimethoxysilane, methylvinyldiethoxysilane, 3-glycidoxypropylmethyldimethoxysilane and 3-glycidoxypropylmethyldiethoxysilane are preferred as the alkoxysilane (8); dimethyldimethoxysilane and dimethyldiethoxysilane are more preferred.

Specific examples of the alkoxysilane (9) serving as an optional ingredient include trimethylmethoxysilane, trimethylethoxysilane, vinyldimethylmethoxysilane, 3-methacryloxypropyldimethylmethoxysilane, 3-methacryloxypropyldimethylethoxysilane, 3-acryloxypropyldimethylmethoxysilane, 3-acryloxypropyl dimethyl ethoxysilane, N-2-(aminoethyl)-3-aminopropyldimethylmethoxysilane and N-2-(aminoethyl)-3-aminopropyldimethylethoxysilane. Trimethylmethoxysilane is preferred.

Copolymerization by hydrolysis and condensation of the trialkoxysilane (5) and the alkoxysilanes (6) to (9) serving as optional ingredients is generally carried out in the absence of a solvent, although it may be carried out in the presence of an organic solvent that dissolves all of the alkoxysilanes used in the reaction (e.g., methanol, ethanol, isopropyl alcohol, butanol, diacetone alcohol, propylene glycol monomethyl ether, propylene glycol monomethyl ether acetate, acetone, toluene, xylene).

When an organic solvent is used, the amount of the organic solvent used, although not particularly limited, is preferably 20 parts by weight or less, more preferably from 0.5 to 10 parts by weight, and even more preferably from 1 to 5 parts by weight, per part by weight of the combined weight of the trialkoxysilane (5) and the alkoxysilanes (6) to (9) serving as optional ingredients.

Copolymerization via hydrolysis and condensation is carried out by adding in a dropwise manner or pouring an acid or base as the catalyst for the hydrolysis reaction into a mixture or solution of the above alkoxysilanes. The acid or base may be added dropwise at this time as an aqueous solution.

Examples of the acid include, without particular limitation, hydrochloric acid, sulfuric acid, nitric acid, acetic acid, formic acid, phosphoric acid, p-toluenesulfonic acid and hydrates thereof, methanesulfonic acid, trifluoromethanesulfonic acid and cationic exchange resins. Hydrochloric acid, methanesulfonic acid and cationic exchange resins are preferred; hydrochloric acid and cationic exchange resins are more preferred; and hydrochloric acid is even more preferred.

The amount of acid used is preferably from 0.001 to 1 mole, and more preferably from 0.01 to 0.2 mole, per mole of the total number of moles of the trialkoxysilane (5) and the alkoxysilanes (6) to (9) serving as optional ingredients.

Examples of the base include, without particular limitation, sodium hydroxide, potassium hydroxide, lithium hydroxide, sodium acetate, potassium acetate, lithium acetate, sodium carbonate, sodium bicarbonate, sodium methoxide, sodium ethoxide, potassium methoxide, potassium ethoxide, potassium tertiary butoxide, triethylamine and anionic exchange resins. Sodium hydroxide, potassium hydroxide and sodium acetate are preferred; sodium acetate is more preferred.

The amount of base used is preferably from 0.001 to 1 mole, and more preferably from 0.01 to 0.2 mole, per mole of the total number of moles of the trialkoxysilane (5) and the alkoxysilanes (6) to (9) serving as optional ingredients.

The amount of water used in copolymerization by hydrolysis and condensation is preferably from 0.1 to 100 moles, more preferably from 0.3 to 10 moles, and even more preferably from 0.5 to 2.0 moles, per mole of the total number of moles of the trialkoxysilane (5) and the alkoxysilanes (6) to (9) serving as optional ingredients.

The reaction temperature in copolymerization by hydrolysis and condensation of the trialkoxysilane (5) and the alkoxysilanes (6) to (9) serving as optional ingredients, although not particularly limited, is generally between 0°C and 150°C, preferably between 20°C and 120°C, more preferably between 40°C and 100°C, and even more preferably between 50°C and 80°C.

The reaction time is generally at least 1 hour, and preferably from 2 to 72 hours.

When copolymerization via hydrolysis and condensation is carried out on the trialkoxysilane (5) and the alkoxysilanes (6) to (9) serving as optional ingredients, the temperature at which the reaction mixture is concentrated, although not particularly limited, is generally between 10°C and 150°C, and preferably between 60°C and 120°C.

The pressure during concentration is not particularly limited; concentration may be carried out under normal pressure or reduced pressure.

The molar ratios between the trialkoxysilane (5) and the alkoxysilanes (6) to (9) serving as optional ingredients are not particularly limited. However, taking into consideration the rapid curability, hardness and flex resistance of the resulting organopolysiloxane, the numbers of moles of the alkoxysilanes (6) to (9) per mole of the trialkoxysilane (5) are preferably from 0 to 1,000 moles of alkoxysilane (6), from 0 to 1,000 moles of alkoxysilane (7), from 0 to 1,000 moles of alkoxysilane (8) and from 0 to 1,000 moles of alkoxysilane (9) per mole of trialkoxysilane (5); more preferably from 0 to 100 moles of alkoxysilane (6), from 0.001 to 100 moles of alkoxysilane (7), from 0 to 100 moles of alkoxysilane (8) and from 0 to 100 moles of alkoxysilane (9) per mole of trialkoxysilane (5); and even more preferably 0 moles of alkoxysilane (6), from 0.001 to 50 moles of alkoxysilane (7), 0 moles of alkoxysilane (8) and 0 moles of alkoxysilane (9).

It is thus preferable to prepare the organopolysiloxane of the invention by copolymerizing, via hydrolysis and condensation, the trialkoxysilane (5) and the alkoxysilane (7). An even better rapid curability, hardness and flex resistance are exhibited with the use of a compound obtained by such a method of preparation. 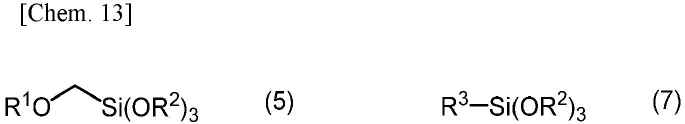 (wherein R¹ to R³ are as defined above.)

The curable composition and the coating composition of the invention (both are referred to collectively below as the "composition") include at least (A) the organopolysiloxane described above and (B) a curing catalyst.

Because the inventive composition includes the above-described organopolysiloxane of the invention, when this composition is used to coat a solid substrate, owing to the structure of the inventive organopolysiloxane, the rapid curability, hardness and flex resistance of the cured film are better than in cases where a conventional organopolysiloxane is used.

The curing catalyst (B) is an ingredient which accelerates the reaction in which hydrolyzable silyl groups on the organopolysiloxane (A) are hydrolytically condensed by moisture in air, thus promoting curing of the composition. The catalyst is added to efficiently cure the composition.

The amount of curing catalyst (B) added is not particularly limited. However, to adjust the cure rate within a suitable range and produce a cured film having the desired properties, and also to enhance the ease of use when the composition is applied, and moreover taking into account factors such as the cost effectiveness associated with catalyst addition, the amount of addition per 100 parts by weight of component (A) is preferably from 0.01 to 50 parts by weight, more preferably from 0.05 to 10 parts by weight, and even more preferably from 0.1 to 5 parts by weight.

The curing catalyst is not particularly limited, provided that it is a curing catalyst which can be used to cure common moisture/condensation cure compositions. Specific examples include alkyltin compounds such as dibutyltin oxide and dioctyltin oxide; alkyltin ester compounds such as dibutyltin diacetate, dibutyltin dilaurate, dioctyltin dilaurate, dibutyltin dioctoate, dioctyltin dioctoate and dioctyltin diversate; titanate esters such as tetraisopropoxytitanium, tetra-n-butoxytitanium, tetrakis(2-ethylhexoxy)titanium, dipropoxybis(acetylacetonato)titanium, titanium diisopropoxybis(ethyl acetoacetate) and titanium isopropoxyoctylene glycol, and also titanium chelate compounds and partial hydrolyzates thereof; organometallic compounds such as zinc naphthenate, zinc stearate, zinc 2-ethyloctoate, iron 2-ethylhexoate, cobalt 2-ethylhexoate, manganese 2-ethylhexoate, cobalt naphthenate, aluminum trihydroxide, aluminum alcoholates, aluminum acylates, salts of aluminum acylates, aluminosiloxy compounds and aluminum chelate compounds; aminoalkyl group-substituted alkoxysilanes such as 3-aminopropyltrimethoxysilane, 3-aminopropyltriethoxysilane, 3-aminopropylmethyldimethoxysilane, 3-aminopropylmethyldiethoxysilane, N-β-(aminoethyl)-γ-aminopropyltrimethoxysilane, N-β-(aminoethyl)-γ-aminopropyltriethoxysilane, N-β-(aminoethyl)-γ-aminopropylmethyldimethoxysilane, N-β-(aminoethyl)-γ-aminopropylmethyldiethoxysilane,bis[3-(trimethoxysilyl)propyl]amine, bis[3-(triethoxysilyl)propyl]amine, N,N'-bis[3-(trimethoxysilyl)propyl]ethane-1,2-diamine, N,N'-bis[3-(triethoxysilyl)propyl]ethane-1,2-diamine and N-phenyl-3-aminopropyltrimethoxysilane; amine compounds and salts thereof such as hexylamine, dodecylamine phosphate and tetramethylguanidine; quaternary ammonium salts such as benzyltriethylammonium acetate; lower fatty acid salts of alkali metals such as potassium acetate, sodium acetate and lithium oxalate; dialkylhydroxylamines such as dimethylhydroxylamine and diethylhydroxylamine; guanidyl group-containing silanes and siloxanes such as tetramethylguanidylpropyltrimethoxysilane, tetramethylguanidylpropylmethyldimethoxysilane, tetramethylguanidylpropyltriethoxysilane, tetramethylguanidylpropylmethyldiethoxysilane and tetramethylguanidylpropyltris(trimethylsiloxy)silane; and phosphazene base-containing silanes and siloxanes such as N,N,N',N',Nʺ,Nʺ-hexamethyl-N‴-[3-(trimethoxysilyl)propyl]phosphorimidic triamide. These may be used singly or may be used as combinations of two or more thereof.

Of these, for an even better reactivity, dioctyltin dilaurate, dioctyltin diversatate, tetraisopropoxytitanium, tetra-n-butoxytitanium, titanium diisopropoxybis(ethyl acetoacetate), 3-aminopropyltrimethoxysilane, 3-aminopropyltriethoxysilane, N-β-(aminoethyl)-γ-aminopropyltrimethoxysilane, bis[3-(trimethoxysilyl)propyl]amine, N,N'-bis[3-(trimethoxysilyl)propyl]ethane-1,2-diamine and tetramethylguanidylpropyltrimethoxysilane are preferred. From the standpoint of the curability of the composition, dioctyltin dilaurate, dioctyltin diversatate, tetra-n-butoxytitanium, 3-aminopropyltrimethoxysilane, 3-aminopropyltriethoxysilane and tetramethylguanidylpropyltrimethoxysilane are more preferred. In order to not include organotin compounds and thus achieve a lower toxicity, tetra-n-butoxytitanium, 3-aminopropyltrimethoxysilane, 3-aminopropyltriethoxysilane and tetramethylguanidylpropyltrimethoxysilane are even more preferred. From the standpoint of the curability of the composition, tetra-n-butoxytitanium and 3-aminopropyltriethoxysilane are especially preferred.

Also, in order to adjust the viscosity of the inventive composition and improve its ease of use or to adjust such properties as the curability of the composition and the hardness and pliability of the resulting applied film, and depending also on the intended purpose of use, apart from the organopolysiloxane serving as component (A), one or more compounds selected from among alkoxysilyl group-containing silane compounds, silicone alkoxy oligomers having an alkoxysilyl group and/or a silanol group on the molecule and silicone resins may be mixed into the composition.

The alkoxysilyl group-containing silane compounds are not particularly limited. Specific examples include those mentioned above in connection with the above alkoxysilanes (5) to (9).

The silicone alkoxy oligomers having an alkoxysilyl group and/or a silanol group on the molecule are not particularly limited and may be ones available as commercial products. Specific examples include X-40-9250, X-40-9246, X-40-9225, KR-500, KR-515, KC-89S, KR-401N, X-40-9227, KR-510, KR-9218, KR-400, X-40-2327 and KR-401, all products of Shin-Etsu Chemical Co., Ltd.

The silicone resins are not particularly limited and may be ones available as commercial products. Specific examples include KR-220L, KR-251, KR-112, KR-300, KR-311, KR-480 and KR-216, all products of Shin-Etsu Chemical Co., Ltd.

In addition, the inventive composition is preferably in a solvent-free form containing substantially no organic solvents (which are often harmful to the human body and flammable), although a solvent may be added and used depending on the intended application and from the standpoint of ease of use.

As used herein, "substantially" means that the amount of solvent contained in the composition is 1 wt% or less, and especially 0.1 wt% or less.

Solvents that may be used are exemplified by the same organic solvents as those used during preparation of the organopolysiloxane (A).

The solvents also include ones which are not ingredients intentionally added to the curable composition or coating composition, such as reaction solvents that cannot be completely removed by vacuum distillation.

Various additives such as adhesion modifiers, inorganic and organic ultraviolet absorbers, light stabilizers, shelf stability modifiers, plasticizers, fillers and pigments may be added to the inventive composition according to the intended use.

A coated solid substrate that is a cured article can be obtained by applying the above-described composition of the invention onto the surface of a solid substrate and curing the composition to form a coating layer.

The method of application used is not particularly limited and may be suitably selected from known methods such as spray coating, spin coating, dip coating, roller coating, brush coating, bar coating and flow coating.

The solid substrate also is not particularly limited. Specific examples include organic polymer substrates composed of epoxy resins, phenolic resins, polycarbonates and polycarbonate blends, acrylic resins such as poly(methyl methacrylate), polyester resins such as poly(ethylene terephthalate), poly(butylene terephthalate) and unsaturated polyester resins, polyamide resins, polyimide resins, acrylonitrile-styrene copolymers, styrene-acrylonitrile-butadiene copolymers, polyvinyl chloride resins, polystyrene resins, blends of polystyrene and polyphenylene ether, cellulose acetate butyrate, polyethylene resins and the like; metal substrates such as plate steel; paint-coated surfaces, glass, ceramic, concrete, slate panels, textiles, lumber, building stone, roof tiles, inorganic fillers such as (hollow) silica, titania, zirconia and alumina; and glass fiber products such as glass fibers, glass cloth, glass tape, glass mats and glass paper. The substrate material and shape are not particularly limited, although the composition of the invention is particularly suitable for use in covering plate steel and glass.

When the inventive composition comes into contact with moisture in the atmosphere, hydrolytic condensation of the organopolysiloxane (A) proceeds and a curing reaction begins. In terms of the atmospheric moisture index, any degree of humidity from 10 to 100% RH will do. The moisture in air suffices, although in general the higher the degree of humidity the more rapidly hydrolysis proceeds. Hence, where desired, moisture may be added to the atmosphere.

The curing reaction temperature and time may be suitably varied according to such factors as the substrate used, the moisture concentration, the catalyst concentration and the type of hydrolyzable group. Generally, the reaction takes from about one minute to about one week within a temperature range that does not exceed the heat-resisting temperature of the substrate used.

Because curing of the inventive composition proceeds well even at normal temperatures, in cases where room-temperature curing is essential, such as for on-site application in particular, coat surface tack disappears in from several minutes to several hours, making for an excellent ease of use. However, it is also possible to carry out heat treatment within a temperature range that does not exceed the heat-resisting temperature of the substrate.

### EXAMPLES

The invention is illustrated more fully below by way of Examples and Comparative Examples, although the invention is not limited by these Examples.

Below, the viscosities of the products are measured values obtained at 25°C with an Ostwald viscometer. The molecular weights are polystyrene-equivalent number-average molecular weights (Mn) determined by GPC measurement with a gel permeation chromatograph from Tosoh Corporation using toluene as the solvent and a refractive index detector.

The average compositional formulas of silicones were computed from integrated values of the detection spectra in ¹H-NMR and ²⁹Si-NMR analysis using a 300 MHz NMR spectrometer from JEOL Ltd.

The contents (wt%) of the silanol hydroxyl groups included in the products were quantitatively determined from the amount of methane gas evolution when a Grignard reagent (methyl magnesium iodide) is made to act on each product.

### [1] Synthesis of Organopolysiloxane

### [Example 1-1] Synthesis of Organopolysiloxane 1

A 300 mL separable flask equipped with a stirrer, a reflux condenser, a dropping funnel and a thermometer was charged with 150 g (0.90 mol) of methoxymethyltrimethoxysilane, following which 17.9 g of 0.1N hydrochloric acid was added dropwise under stirring at 25°C and hydrolytic condensation was carried out at 60°C for 2 hours. The system was heated to 120°C and by-product methanol was distilled off under normal pressure, following which filtration was carried out, giving Organopolysiloxane 1 (yield, 101 g). The resulting Organopolysiloxane 1 was a clear colorless liquid of the average compositional formula shown below. The viscosity was 124 mm²/s, the number-average molecular weight was 840 and the silanol hydroxyl group content was 0.1 wt%.

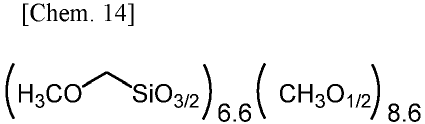

### [Example 1-2] Synthesis of Organopolysiloxane 2

A 300 mL separable flask equipped with a stirrer, a reflux condenser, a dropping funnel and a thermometer was charged with 150 g (0.67 mol) of ethoxymethyltriethoxysilane, following which 13.4 g of 0.1N hydrochloric acid was added dropwise under stirring at 25°C and hydrolytic condensation was carried out at 60°C for 2 hours. The system was heated to 120°C and by-product ethanol was distilled off under normal pressure, following which filtration was carried out, giving Organopolysiloxane 2 (yield, 96 g). The resulting Organopolysiloxane 2 was a clear colorless liquid of the average compositional formula shown below. The viscosity was 20 mm²/s, the number-average molecular weight was 815 and the silanol hydroxyl group content was 0.5 wt%.

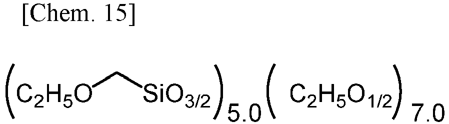

### [Example 1-3] Synthesis of Organopolysiloxane 3

A 300 mL separable flask equipped with a stirrer, a reflux condenser, a dropping funnel and a thermometer was charged with 3.0 g (0.02 mol) of methoxymethyltrimethoxysilane and 150 g (1.1 mol) of methyltrimethoxysilane, following which 22.2 g of 0.1N hydrochloric acid was added dropwise under stirring at 25°C and hydrolytic condensation was carried out at 60°C for 2 hours. The system was heated to 120°C and by-product methanol was distilled off under normal pressure, following which filtration was carried out, giving Organopolysiloxane 3 (yield, 93 g). The resulting Organopolysiloxane 3 was a clear colorless liquid of the average compositional formula shown below. The viscosity was 44 mm²/s, the number-average molecular weight was 820 and the silanol hydroxyl group content was 0 wt%.

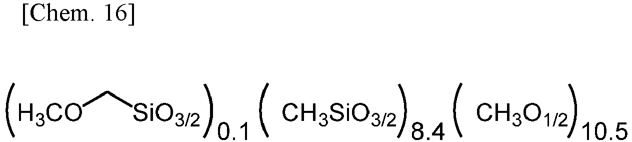

### [Example 1-4] Synthesis of Organopolysiloxane 4

Aside from changing the amount of 0.1N hydrochloric acid used to 30.2 g, Organopolysiloxane 4 (yield, 73 g) was obtained in the same way as in Example 1-3. The resulting Organopolysiloxane 4 was a clear colorless liquid of the average compositional formula shown below. The viscosity was 300 mm²/s, the number-average molecular weight was 2,490 and the silanol hydroxyl group content was 0.3 wt%.

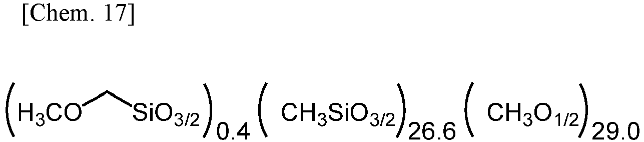

### [Example 1-5] Synthesis of Organopolysiloxane 5

A 300 mL separable flask equipped with a stirrer, a reflux condenser, a dropping funnel and a thermometer was charged with 19.4 g (0.09 mol) of ethoxymethyltriethoxysilane and 140 g (0.79 mol) of methyltriethoxysilane, following which 17.3 g of 0.1N hydrochloric acid was added dropwise under stirring at 25°C and hydrolytic condensation was carried out at 60°C for 2 hours. The system was heated to 120°C and by-product ethanol was distilled off under normal pressure, following which filtration was carried out, giving Organopolysiloxane 5 (yield, 87 g). The resulting Organopolysiloxane 5 was a clear colorless liquid of the average compositional formula shown below. The viscosity was 12 mm²/s, the number-average molecular weight was 600 and the silanol hydroxyl group content was 0 wt%.

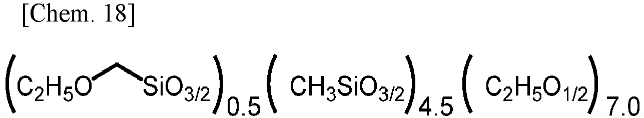

### [Example 1-6] Synthesis of Organopolysiloxane 6

A 300 mL separable flask equipped with a stirrer, a reflux condenser, a dropping funnel and a thermometer was charged with 83.1 g (0.5 mol) of methoxymethyltrimethoxysilane and 60.1 g (0.5 mol) of dimethyldimethoxysilane, following which 19.8 g of 0.1N hydrochloric acid was added dropwise under stirring at 25°C and hydrolytic condensation was carried out at 60°C for 2 hours. The system was heated to 120°C and by-product methanol was distilled off under normal pressure, following which filtration was carried out, giving Organopolysiloxane 6 (yield, 90 g). The resulting Organopolysiloxane 6 was a clear colorless liquid of the average compositional formula shown below. The viscosity was 70 mm²/s, the number-average molecular weight was 820 and the silanol hydroxyl group content was 0.1 wt%.

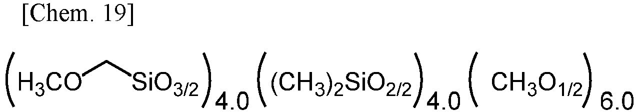

### [Example 1-7] Synthesis of Organopolysiloxane 7

A 300 mL separable flask equipped with a stirrer, a reflux condenser, a dropping funnel and a thermometer was charged with 3.0 g (0.02 mol) of methoxymethyltrimethoxysilane, 75 g (0.55 mol) of methyltrimethoxysilane and 66.2 g (0.55 mol) of dimethyldimethoxysilane, following which 22.2 g of 0.1N hydrochloric acid was added dropwise under stirring at 25°C and hydrolytic condensation was carried out at 60°C for 2 hours. The system was heated to 120°C and by-product methanol was distilled off under normal pressure, following which filtration was carried out, giving Organopolysiloxane 7 (yield, 85 g). The resulting Organopolysiloxane 7 was a clear colorless liquid of the average compositional formula shown below. The viscosity was 32 mm²/s, the number-average molecular weight was 870 and the silanol hydroxyl group content was 0 wt%.

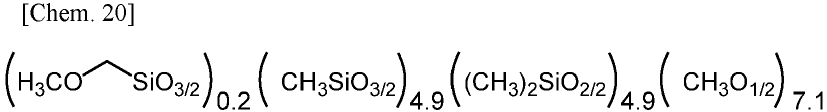

### [Example 1-8] Synthesis of Organopolysiloxane 8

A 300 mL separable flask equipped with a stirrer, a reflux condenser, a dropping funnel and a thermometer was charged with 83.1 g (0.5 mol) of methoxymethyltrimethoxysilane and 99.1 g (0.5 mol) of phenyltrimethoxysilane, following which 19.8 g of 0.1N hydrochloric acid was added dropwise under stirring at 25°C and hydrolytic condensation was carried out at 60°C for 2 hours. The system was heated to 120°C and by-product methanol was distilled off under normal pressure, following which filtration was carried out, giving Organopolysiloxane 8 (yield, 128 g). The resulting Organopolysiloxane 8 was a clear colorless liquid of the average compositional formula shown below. The viscosity was 170 mm²/s, the number-average molecular weight was 1,410 and the silanol hydroxyl group content was 0.2 wt%.

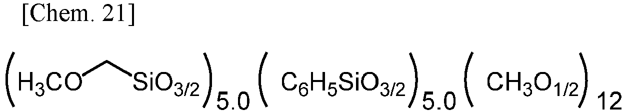

### [Example 1-9] Synthesis of Organopolysiloxane 9

A 300 mL separable flask equipped with a stirrer, a reflux condenser, a dropping funnel and a thermometer was charged with 83.1 g (0.5 mol) of methoxymethyltrimethoxysilane and 122.1 g (0.5 mol) of diphenyldimethoxysilane, following which 19.8 g of 0.1N hydrochloric acid was added dropwise under stirring at 25°C and hydrolytic condensation was carried out at 60°C for 2 hours. The system was heated to 120°C and by-product methanol was distilled off under normal pressure, following which filtration was carried out, giving Organopolysiloxane 9 (yield, 150 g). The resulting Organopolysiloxane 9 was a clear colorless liquid of the average compositional formula shown below. The viscosity was 80 mm²/s, the number-average molecular weight was 1,000 and the silanol hydroxyl group content was 0.5 wt%.

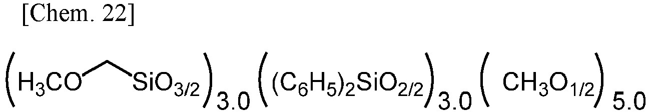

### [Example 1-10] Synthesis of Organopolysiloxane 10

A 300 mL separable flask equipped with a stirrer, a reflux condenser, a dropping funnel and a thermometer was charged with 83.1 g (0.5 mol) of methoxymethyltrimethoxysilane and 76.1 g (0.5 mol) of tetramethoxysilane, following which 19.8 g of 0.1N hydrochloric acid was added dropwise under stirring at 25°C and hydrolytic condensation was carried out at 60°C for 2 hours. The system was heated to 120°C and by-product methanol was distilled off under normal pressure, following which filtration was carried out, giving Organopolysiloxane 10 (yield, 105 g). The resulting Organopolysiloxane 10 was a clear colorless liquid of the average compositional formula shown below. The viscosity was 580 mm²/s, the number-average molecular weight was 1,180 and the silanol hydroxyl group content was 0 wt%.

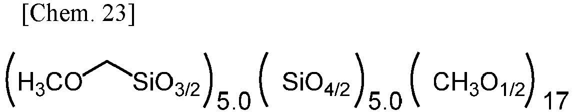

### [Example 1-11] Synthesis of Organopolysiloxane 11

A 300 mL separable flask equipped with a stirrer, a reflux condenser, a dropping funnel and a thermometer was charged with 16.6 g (0.1 mol) of methoxymethyltrimethoxysilane, 119 g (0.6 mol) of phenyltrimethoxysilane and 36.1 g (0.3 mol) of dimethyldimethoxysilane, following which 19.8 g of 0.1N hydrochloric acid was added dropwise under stirring at 25°C and hydrolytic condensation was carried out at 60°C for 2 hours. The system was heated to 120°C and by-product methanol was distilled off under normal pressure, following which filtration was carried out, giving Organopolysiloxane 11 (yield, 120 g). The resulting Organopolysiloxane 11 was a clear colorless liquid of the average compositional formula shown below. The viscosity was 160 mm²/s, the number-average molecular weight was 1,500 and the silanol hydroxyl group content was 0.3 wt%.

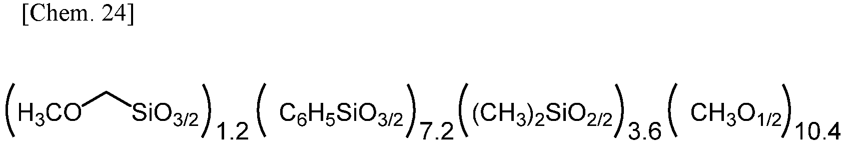

### [Example 1-12] Synthesis of Organopolysiloxane 12

A 300 mL separable flask equipped with a stirrer, a reflux condenser, a dropping funnel and a thermometer was charged with 10 g (0.06 mol) of methoxymethyltrimethoxysilane, 8.2 g (0.06 mol) of methyltrimethoxysilane and 206.2 g (0.88 mol) of 3-acryloxypropyltrimethoxysilane, following which 13.5 g of 0.1N hydrochloric acid was added dropwise under stirring at 25°C and hydrolytic condensation was carried out at 60°C for 2 hours. The system was heated to 120°C and by-product methanol was distilled off under normal pressure, following which filtration was carried out, giving Organopolysiloxane 12 (yield, 185 g). The resulting Organopolysiloxane 12 was a clear colorless liquid of the average compositional formula shown below. The viscosity was 45 mm²/s, the number-average molecular weight was 940 and the silanol hydroxyl group content was 0.2 wt%.

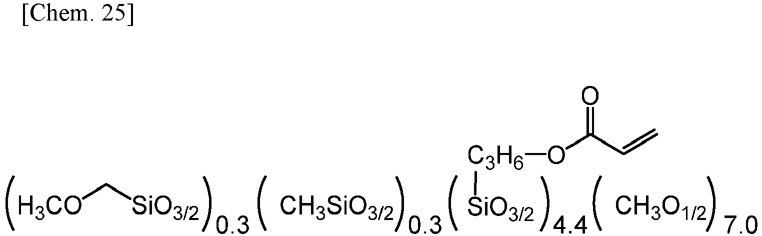

### [Example 1-13] Synthesis of Organopolysiloxane 13

A 300 mL separable flask equipped with a stirrer, a reflux condenser, a dropping funnel and a thermometer was charged with 41.6 g (0.25 mol) of methoxymethyltrimethoxysilane, 34.1 g (0.25 mol) of methyltrimethoxysilane and 118.2 g (0.5 mol) of 3-glycidoxypropyltrimethoxysilane, following which 14.4 g of 0.1N hydrochloric acid was added dropwise under stirring at 25°C and hydrolytic condensation was carried out at 60°C for 2 hours. The system was heated to 120°C and by-product methanol was distilled off under normal pressure, following which filtration was carried out, giving Organopolysiloxane 13 (yield, 150 g). The resulting Organopolysiloxane 13 was a clear colorless liquid of the average compositional formula shown below. The viscosity was 60 mm²/s, the number-average molecular weight was 930 and the silanol hydroxyl group content was 0 wt%.

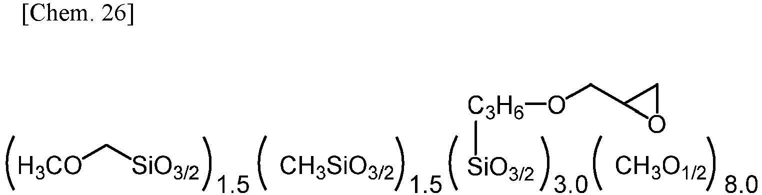

### [Example 1-14] Synthesis of Organopolysiloxane 14

A 300 mL separable flask equipped with a stirrer, a reflux condenser, a dropping funnel and a thermometer was charged with 62.3 g (0.37 mol) of methoxymethyltrimethoxysilane, 51 g (0.37 mol) of methyltrimethoxysilane and 49.1 g (0.25 mol) of 3-mercaptopropyltrimethoxysilane, following which 15.3 g of 0.1N hydrochloric acid was added dropwise under stirring at 25°C and hydrolytic condensation was carried out at 60°C for 2 hours. The system was heated to 120°C and by-product methanol was distilled off under normal pressure, following which filtration was carried out, giving Organopolysiloxane 14 (yield, 120 g). The resulting Organopolysiloxane 14 was a clear colorless liquid of the average compositional formula shown below. The viscosity was 12 mm²/s, the number-average molecular weight was 750 and the silanol hydroxyl group content was 0.2 wt%.

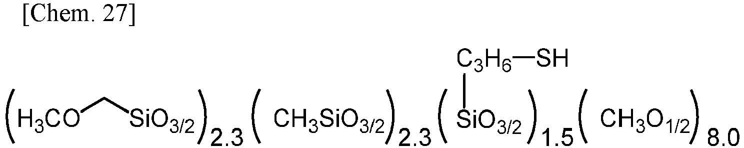

### [Example 1-15] Synthesis of Organopolysiloxane 15

Aside from using 218.5 g (0.88 mol) of 3-methacryloxypropyltrimethoxysilane in place of 206.2 g of 3-acryloxypropyltrimethoxysilane, Organopolysiloxane 15 (yield, 195 g) was obtained in the same way as in Example 1-12. The resulting Organopolysiloxane 15 was a clear colorless liquid of the average compositional formula shown below. The viscosity was 50 mm²/s, the number-average molecular weight was 1,000 and the silanol hydroxyl group content was 0.1 wt%.

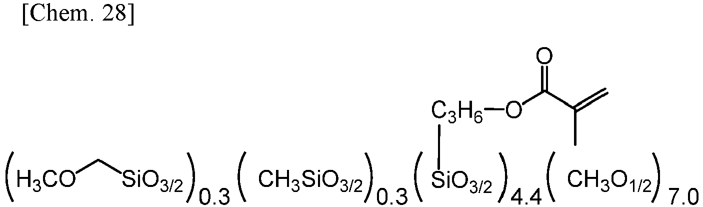

### [Example 1-16] Synthesis of Organopolysiloxane 16

A 300 mL separable flask equipped with a stirrer, a reflux condenser, a dropping funnel and a thermometer was charged with 73.9 g (0.44 mol) of methoxymethyltrimethoxysilane, 81.5 g (0.33 mol) of diphenyldimethoxysilane and 32.9 g (0.22 mol) of vinyltrimethoxysilane, following which 13.5 g of 0.1N hydrochloric acid was added dropwise under stirring at 25°C and hydrolytic condensation was carried out at 60°C for 2 hours. The system was heated to 120°C and by-product methanol was distilled off under normal pressure, following which filtration was carried out, giving Organopolysiloxane 16 (yield, 150 g). The resulting Organopolysiloxane 16 was a clear colorless liquid of the average compositional formula shown below. The viscosity was 130 mm²/s, the number-average molecular weight was 1,130 and the silanol hydroxyl group content was 0.1 wt%.

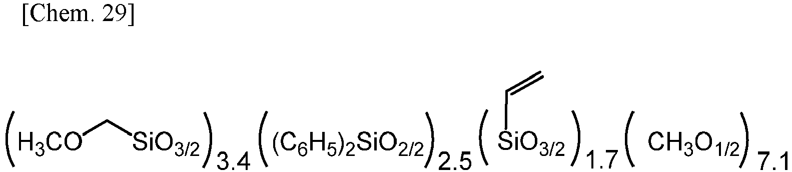

### [Example 1-17] Synthesis of Organopolysiloxane 17

A 300 mL separable flask equipped with a stirrer, a reflux condenser, a dropping funnel and a thermometer was charged with 83.1 g (0.5 mol) of methoxymethyltrimethoxysilane and 111.1 g (0.5 mol) of N-2-(aminoethyl)-3-aminopropyltrimethoxysilane, following which 19.8 g of 0.1N hydrochloric acid was added dropwise under stirring at 25°C and hydrolytic condensation was carried out at 60°C for 2 hours. The system was heated to 120°C and by-product methanol was distilled off under normal pressure, following which filtration was carried out, giving Organopolysiloxane 17 (yield, 140 g). The resulting Organopolysiloxane 17 was a clear colorless liquid of the average compositional formula shown below. The viscosity was 600 mm²/s, the number-average molecular weight was 1,230 and the silanol hydroxyl group content was 0 wt%.

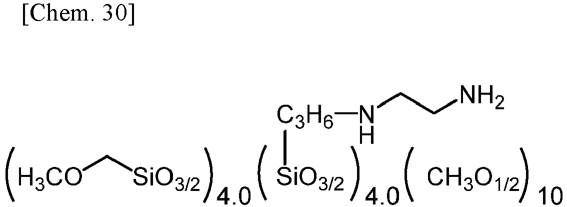

]

### [Example 1-18] Synthesis of Organopolysiloxane 18

Aside from using 89.6 g (0.5 mol) of 3-aminopropyltrimethoxysilane in place of 111.1 g of N-2-(aminoethyl)-3-aminopropyltrimethoxysilane, Organopolysiloxane 18 (yield, 120 g) was obtained in the same way as in Example 1-17. The resulting Organopolysiloxane 18 was a clear colorless liquid having a viscosity of 400 mm²/s, a number-average molecular weight of 1,060, a silanol hydroxyl group content of 0 wt%, and the average compositional formula shown below.

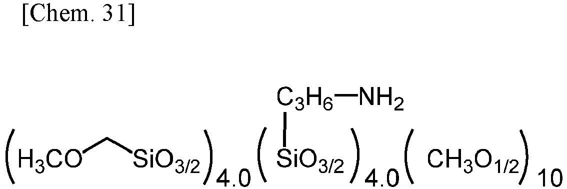

### [Example 1-19] Synthesis of Organopolysiloxane 19

Aside from using 234.1 g (0.5 mol) of (1H,1H,2H,2H-tridecafluorooctyl)trimethoxysilane in place of 111.1 g of N-2-(aminoethyl)-3-aminopropyltrimethoxysilane, Organopolysiloxane 19 (yield, 260 g) was obtained in the same way as in Example 1-17. The resulting Organopolysiloxane 19 was a clear colorless liquid of the average compositional formula shown below. The viscosity was 90 mm²/s, the number-average molecular weight was 1,400, and the silanol hydroxyl group content was 0.5 wt%.

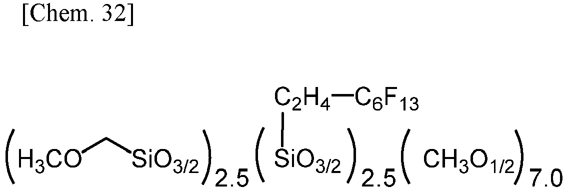

### [Example 1-20] Synthesis of Organopolysiloxane 20

A 300 mL separable flask equipped with a stirrer, a reflux condenser, a dropping funnel and a thermometer was charged with 83.1 g (0.5 mol) of methoxymethyltrimethoxysilane and 317.3 g (0.5 mol) of polyethylene glycol methyl-3-trimethoxysilylpropyl ether (average degree of polymerization of polyethylene glycol portion, 10), following which 19.8 g of 0.1N hydrochloric acid was added dropwise under stirring at 25°C and hydrolytic condensation was carried out at 60°C for 2 hours. The system was heated to 120°C and by-product methanol was distilled off under normal pressure, following which filtration was carried out, giving Organopolysiloxane 20 (yield, 340 g). The resulting Organopolysiloxane 20 was a clear yellow liquid of the average compositional formula shown below. The viscosity was 80 mm²/s, the number-average molecular weight was 1,820 and the silanol hydroxyl group content was 0.3 wt%.

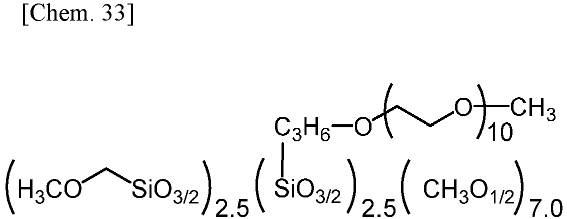

### [Comparative Example 1-1] Synthesis of Organopolysiloxane 21

A 300 mL separable flask equipped with a stirrer, a reflux condenser, a dropping funnel and a thermometer was charged with 150 g (1.1 mol) of methyltrimethoxysilane, following which 21.8 g of 0.1N hydrochloric acid was added dropwise under stirring at 25°C and hydrolytic condensation was carried out at 60°C for 2 hours. The system was heated to 120°C and by-product methanol was distilled off under normal pressure, following which filtration was carried out, giving Organopolysiloxane 21 (yield, 90 g). The resulting Organopolysiloxane 21 was a clear colorless liquid of the average compositional formula shown below. The viscosity was 50 mm²/s, the number-average molecular weight was 860 and the silanol hydroxyl group content was 0 wt%.

[Chem. 34] (CH₃SiO_{3/2})_{9.0}(CH₃O_{1/2})₁₁

### [Comparative Example 1-2] Synthesis of Organopolysiloxane 22

A 300 mL separable flask equipped with a stirrer, a reflux condenser, a dropping funnel and a thermometer was charged with 150 g (0.84 mol) of methyltriethoxysilane, following which 16.7 g of 0.1N hydrochloric acid was added dropwise under stirring at 25°C and hydrolytic condensation was carried out at 60°C for 2 hours. The system was heated to 120°C and by-product ethanol was distilled off under normal pressure, following which filtration was carried out, giving Organopolysiloxane 22 (yield, 81 g). The resulting Organopolysiloxane 22 was a clear colorless liquid of the average compositional formula shown below. The viscosity was 11 mm²/s, the number-average molecular weight was 600 and the silanol hydroxyl group content was 0 wt%.

[Chem. 35] (CH₃SiO_{3/2})_{5.0}(C₂H₅O_{1/2})_{7.0}

### [2] Production of Coating Compositions and Cured Films

### [Example 2-1]

A coating composition was prepared by uniformly mixing together 100 parts by weight of the Organopolysiloxane 1 obtained in Example 1-1 and 2 parts by weight of tetra-n-butoxytitanium as the curing catalyst.

The resulting coating composition was applied onto plate glass or polished plate steel using a No. 14 bar coater at 25°C in 50% RH air, following which it was dried and cured for one day at 25°C in 50% RH air, thereby producing a cured film.

### [Examples 2-2 to 2-20 and Comparative Examples 2-1 and 2-2]

Aside from changing Organopolysiloxane 1 in Example 2-1 to Organopolysiloxanes 2 to 20 obtained in Examples 1-2 to 1-20 and Organopolysiloxanes 21 and 22 obtained in Comparative Examples 1-1 and 1-2, coating compositions and cured films were produced in the same way as in Example 2-1.

### [Example 2-21]

Aside from using 2 parts by weight of di-n-butoxy(ethyl acetoacetate)aluminum instead of 2 parts by weight of tetra-n-butoxytitanium, a coating composition and a cured film were produced in the same way as in Example 2-1.

### [Example 2-22]

Aside from using 2 parts by weight of 3-aminopropyltriethoxysilane instead of 2 parts by weight of tetra-n-butoxytitanium, a coating composition and a cured film were produced in the same way as in Example 2-2.

### [Example 2-23]

Aside from using 2 parts by weight of tetramethylguanidylpropyltrimethoxysilane instead of 2 parts by weight of tetra-n-butoxytitanium, a coating composition and a cured film were produced in the same way as in Example 2-1.

### [Comparative Example 2-3]

Aside from using 2 parts by weight of 3-aminopropyltriethoxysilane instead of 2 parts by weight of tetra-n-butoxytitanium, a coating composition and a cured film were produced in the same way as in Comparative Example 2-1.

The following evaluations were performed on the cured films produced in Examples 2-1 to 2-23 and Comparative Examples 2-1 to 2-3. The results are presented in Tables 1, 2 and 3.

### [Dry-to-Touch Time]

The dry-to-touch time indicates the time until, when a finger was pressed against the coated surface of a test specimen obtained by applying the coating composition onto plate glass by the above coating method and leaving it to stand at 25°C in 50% RH air so that moisture curing proceeds, the applied film no longer adhered to the finger. A smaller value indicates a better curability.

### [Pencil Hardness]

The pencil hardness was measured by applying a load of 750 g in accordance with the pencil scratch test method described in JIS K 5600-5-4 to a test specimen obtained by forming a cured film on plate glass by the coating method described above.

### [Flex Resistance]

The flex resistance for a test specimen obtained by using the above coating method to form a cured film on polished plate steel was measured using a cylindrical mandrel (Type 1) according to the method described in JIS K 5600-5-1.

**[Table 1]**

| | Example | | | | | | | | | |
|---|---|---|---|---|---|---|---|---|---|---|
| | 2-1 | 2-2 | 2-3 | 2-4 | 2-5 | 2-6 | 2-7 | 2-8 | 2-9 | 2-10 |
| Organopolysiloxane compound | 1 | 2 | 3 | 4 | 5 | 6 | 7 | 8 | 9 | 10 |
| Dry-to-touch time | 30 min | 2 hr | 1.5 hr | 3 hr | 5 hr | 1 hr | 2 hr | 1 hr | 4 hr | 30 min |
| Pencil hardness | 2H | H | HB | B | F | F | B | H | B | 3H |
| Flex resistance | 2 mmφ | 2 mmφ | 2 mmφ | 2 mmφ | 2 mmφ | 2 mmφ | 2 mmφ | 2 mmφ | 2 mmφ | 2 mmφ |

**[Table 2]**

| | Example | | | | | | | | | |
|---|---|---|---|---|---|---|---|---|---|---|
| | 2-11 | 2-12 | 2-13 | 2-14 | 2-15 | 2-16 | 2-17 | 2-18 | 2-19 | 2-20 |
| Organopolysiloxane compound | 11 | 12 | 13 | 14 | 15 | 16 | 17 | 18 | 19 | 20 |
| Dry-to-touch time | 4 hr | 5 hr | 3 hr | 2 hr | 5 hr | 2 hr | 30 min | 30 min | 5 hr | 5 hr |
| Pencil hardness | H | B | HB | H | B | H | H | H | H | B |
| Flex resistance | 2 mmφ | 2 mmφ | 2 mmφ | 2 mmφ | 2 mmφ | 2 mmφ | 2 mmφ | 2 mmφ | 2 mmφ | 2 mmφ |

**[Table 3]**

| | Example | | | Comparative Example | | |
|---|---|---|---|---|---|---|
| | 2-21 | 2-22 | 2-23 | 2-1 | 2-2 | 2-3 |
| Organopolysiloxane compound | 1 | 2 | 1 | 21 | 22 | 21 |
| Dry-to-touch time | 1 hr | 10 min | 1 min | 7 hr | 24 hr | did not cure |
| Pencil hardness | 3H | H | 2H | 2B | 6B | |
| Flex resistance | 2 mmφ | 2 mmφ | 2 mmφ | 8 mmφ | 8 mmφ | |

As shown in Tables 1, 2 and 3, compared to the cured films produced in Comparative Examples 2-1 and 2-2, the cured films produced in Examples 2-1 to 2-23 using Organopolysiloxanes 1 to 20 obtained in Examples 1-1 to 1-20 had both a good hardness and a good flex resistance. Also, even when an amine compound was used as the curing catalyst, the rapid curability was excellent.

By contrast, each of the cured films produced in Comparative Examples 2-1 and 2-2 had a hardness, flex resistance and curability that were insufficient. Also, in Comparative Example 2-3, curing did not proceed.

As explained above, the organopolysiloxanes of the present invention have an excellent rapid curability even in cases where an amine compound is used as the curing catalyst. In addition, cured films capable of achieving both good hardness and good flex resistance can be obtained, which has been difficult to do using conventional silicone resins and silicone alkoxy oligomers.

## Claims

1. An organopolysiloxane comprising a structural unit of general formula (1) below 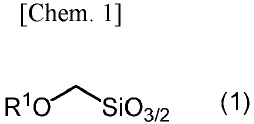 (wherein R¹ is a substituted or unsubstituted alkyl group of 1 to 12 carbon atoms or a substituted or unsubstituted aryl group of 6 to 10 carbon atoms) and at least one type of group selected from groups of general formula (2) below which bonds directly to a silicon atom
[Chem. 2] R²O- (2)
(wherein R² is a hydrogen atom, a substituted or unsubstituted alkyl group of 1 to 10 carbon atoms or a substituted or unsubstituted aryl group of 6 to 10 carbon atoms).

2. The organopolysiloxane of claim 1 which has average compositional formula (3) below 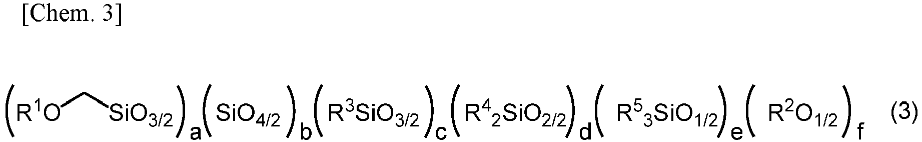 (wherein R¹ and R² are as defined above, R³, R⁴ and R⁵ are each independently a monovalent organic group, and the subscripts a, b, c, d, e and f are numbers which satisfy the conditions a > 0, b ≥ 0, c ≥ 0, d ≥ 0, e ≥ 0 and f > 0).

3. The organopolysiloxane of claim 1 or 2 which has average compositional formula (4) below 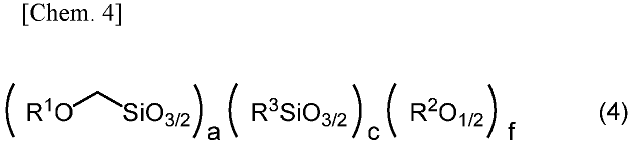 (wherein R¹, R², R³, a and f are as defined above, and c is a number that satisfies the condition c > 0).

4. A method for preparing the organopolysiloxane of claim 1 or 2, comprising the step of hydrolyzing and condensing an alkoxysilane which includes a trialkoxysilane of structural formula (5) below 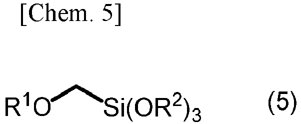 (wherein R¹ and R² are as defined above).

5. A method for preparing the organopolysiloxane of claim 3, comprising the step of copolymerizing by hydrolysis and condensation a trialkoxysilane of structural formula (5) below 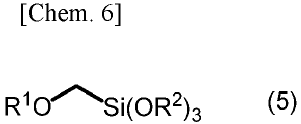 (wherein R¹ and R² are as defined above) and an alkoxysilane of structural formula (7) below
[Chem. 7] R³-Si(OR²)₃ (7)
(wherein R² and R³ are as defined above).

6. A curable composition comprising (A) the organopolysiloxane of any one of claims 1 to 3 and (B) a curing catalyst.

7. The curable composition of claim 6, wherein the curing catalyst (B) is an amine compound.

8. A cured product obtained by curing the curable composition of claim 6 or 7.

9. A coating composition comprising (A) an organopolysiloxane of any one of claims 1 to 3 and (B) a curing catalyst.

10. The coating composition of claim 9, wherein the curing catalyst (B) is an amine compound.

11. An article having a coating layer obtained by curing the coating composition of claim 9 or 10.
